# EUROPEAN PATENT APPLICATION

(11) **EP 1 867 954 A2**
(43) Date of publication of application: **19.12.2007**
(21) Application number: 07110308.9
(22) Date of filing: 14.06.2007
(51) Int. Cl.: G01C 21/36, G10L 11/04

(54) **Navigation device and associated control method, program for the control method and associated recording medium.**

(30) Priority: 16.06.2006 JP 2006166855
(71) Applicant: Sony Corporation, Minato-ku Tokyo 108-0075 (JP)
(72) Inventor: SHIROISHI, Tetsuya, Tokyo 108-0075 (JP)
(74) Representative: Melzer, Wolfgang

(57) **Abstract**

A navigation device that transmits data on a user's voice to a communication party, the voice data being acquired by a microphone, receives data on the communication party's voice, and offers the communication-party-voice data to the user is provided. The navigation device includes a voice-data-generation unit that generates guide-voice data, a voice-output unit that offers a guide voice to the user, a voice-data-analysis unit that measures a pitch of the communication party's voice by analyzing the communication-party-voice data, and a voice-data-variable unit that makes a pitch of the guide voice variable, so as to make the difference between the pitches of the communication party's voice and the guide voice significant on the basis of the analysis result when the communication party's voice and the guide voice are offered to the user at the same time.

## Description

### CROSS REFERENCES TO RELATED APPLICATIONS

The present invention contains subject matter related to Japanese Patent Application JP 2006-166855 filed in the Japanese Patent Office on June 16, 2006, the entire contents of which are incorporated herein by reference.

### BACKGROUND OF THE INVENTION

### 1. Field of the Invention

The present invention relates to a navigation device, a navigation-device-control method, a program of the navigation-device-control method, and a recording medium recording the program of the navigation-device-control method. The present invention can be used for a navigation device with a guide-voice function, the navigation device being capable of eliminating a confusion caused by a guide voice generated by the car-navigation device mingled with a communication voice output from a conversation device such as a mobile phone when the conversation device is brought into a motor vehicle. According to the present invention, the pitch of a voice generated from guide-voice data is made variable so that the difference between the pitch of the voice generated from the guide-voice data and that of the voice of a communication party becomes significant. Subsequently, it becomes easy to catch the guide voice and the communication party's voice.

### 2. Description of the Related Art

In the past, car-navigation devices are configured, so as to guide a user to a destination by showing a map image through a display unit such as a liquid-crystal-display panel on the basis of current-position information acquired by a global-positioning system (GPS). There have been proposed car-navigation devices that can instruct the user to turn right and/or left, for example, by voice. Further, in recent years, there have been proposed car-navigation devices that can analyze the user's voice acquired through a microphone and receive the input of data on the destination or the like.

The above-described car-navigation device that can receive the input of voice data can be used for the mobile phone. Namely, a unit for inputting voice data on the destination or the like and a unit for outputting a guide voice that are provided in the car-navigation device are used by a user having a conversation through the mobile phone, and the above-described voice-input unit and voice-output unit constitute a handsfree system of the mobile phone.

In the past, the above-described car-navigation system achieving the handsfree system of the mobile phone by using the above-described voice-input unit and voice-output unit did not output the guide voice while a conversation is held. On the other hand, Japanese Unexamined Patent Application Publication No. 10-145486 discloses the configuration of a vehicle-mounted device constituting a handsfree system. Although the above-described vehicle-mounted device outputs voices under normal condition, the vehicle-mounted device stops outputting voices while a conversation is held.

Incidentally, when the above-described car-navigation device achieving the handsfree system stops outputting guide voices while a conversation is held, it becomes difficult to notify the user of the time where the user should exit from an expressway and the time where the user should change the travel direction by turning right and/or left, for example. Subsequently, it becomes difficult to guide the user to a destination.

A method of outputting the guide voice during the conversation may be considered, so as to solve the above-described problem. In that case, however, it becomes difficult to catch the communication party's voice due to the guide voice and vice versa.

### SUMMARY OF THE INVENTION

Accordingly, the present invention has been achieved, so as to propose a navigation device, a method of controlling the navigation device, a program of the method of controlling the navigation device, and a recording medium recording the program of the method of controlling the navigation device that allow a user to catch a guide voice and the voice of a communication party without difficulty.

Therefore, according to an embodiment of the present invention, there is provided a navigation device configured to transmit data on the voice of a user to a communication party, the voice data being acquired by a microphone, receive data on a voice of the communication party, and offer the communication-party-voice data to the user. The navigation device includes a voice-data-generation unit configured to generate voice data provided, so as to perform guiding, a voice-output unit configured to offer a voice generated from the guide-voice data to the user, a voice-data-analysis unit configured to measure a pitch of the voice of the communication party by analyzing the communication-party-voice data, and a voice-data-variable unit configured to make a pitch of the voice generated from the guide-voice data variable, so as to make a difference between the pitch of the communication party's voice and the pitch of the voice generated from the guide-voice data significant on the basis of the analysis result obtained by the voice-data-analysis unit when the voice generated from the communication-party-voice data and the voice generated from the guide-voice data are offered to the user at the same time.

According to another embodiment of the present invention, there is provided a method of controlling a navigation device configured to transmit data on the voice of a user to a communication party, the voice data being acquired by a microphone, receive data on a voice of the communication party, and offer the communication-party-voice data to the user. The control method includes the steps of generating voice data provided, so as to perform guiding, outputting a voice generated from the guide-voice data, so as to offer the generated voice to the user, analyzing the communication-party-voice data, so as to measure a pitch of the communication party's voice, and making a pitch of the voice generated from the guide-voice data variable, so as to make a difference between the pitch of the communication party's voice and the pitch of the voice generated from the guide-voice data significant on the basis of the analysis result obtained, at the analysis step, when the voice generated from the communication-party-voice data and the voice generated from the guide-voice data are offered to the user at the same time.

According to another embodiment of the present invention, there is provided a program of a method of controlling a navigation device configured to transmit data on the voice of a user to a communication party, the voice data being acquired by a microphone, receive data on the voice of the communication party, and offer the communication-party-voice data to the user. The program includes the steps of generating voice data provided, so as to perform guiding, outputting a voice generated from the guide-voice data, so as to offer the generated voice to the user, analyzing the communication-party-voice data, so as to measure the pitch of the communication party's voice, and making a pitch of the voice generated from the guide-voice data variable, so as to make the difference between the pitch of the communication party's voice and the pitch of the voice generated from the guide-voice data significant on the basis of the analysis result obtained, at the analysis step, when the voice generated from the communication-party-voice data and the voice generated from the guide-voice data are offered to the user at the same time.

According to another embodiment of the present invention, there is provided a recording medium recording a program of a method of controlling a navigation device configured to transmit data on the voice of a user to a communication party, the voice data being acquired by a microphone, receive data on the voice of the communication party, and offer the communication-party-voice data to the user. The control method includes the steps of generating voice data provided, so as to perform guiding, outputting a voice generated from the guide-voice data, so as to offer the generated voice to the user, analyzing the communication-party-voice data, so as to measure a pitch of the communication party's voice, and making a pitch of the voice generated from the guide-voice data variable, so as to make the difference between the pitch of the communication party's voice and the pitch of the voice generated from the guide-voice data significant on the basis of the analysis result obtained, at the analysis step, when the voice generated from the communication-party-voice data and the voice generated from the guide-voice data are offered to the user at the same time.

Thus, when the pitch of the communication party's voice is high, the pitch of the guide voice offered to the user becomes low. On the contrary, if the pitch of the communication party's voice is low, the pitch of the guide voice offered to the user becomes high. Subsequently, the pitch of the communication party's voice does not become the same as that of the guide voice so that the user can easily catch the guide voice and the communication party's voice.

According to an embodiment of the present invention, the guide voice and the communication party's voice can be caught without difficulty.

### BRIEF DESCRIPTION OF THE DRAWINGS

Fig. 1 is a flowchart showing processing procedures performed by a central-processing unit (CPU) provided in a car-navigation device according to a first embodiment of the present invention;
Fig. 2 is a block diagram of the car-navigation device according to the first embodiment;
Fig. 3A is a block diagram illustrating voice-data processing performed in the car-navigation device shown in Fig. 2;
Fig. 3B is a block diagram illustrating voice-data processing different from the voice-data processing shown in Fig. 3A, the different voice-data processing being performed in the car-navigation device shown in Fig. 2;
Fig. 4 is a flowchart showing processing procedures performed, so as to detect the pitch of the voice of a communication party;
Fig. 5 is a flowchart showing processing procedures performed when a conversation is started while a guide voice is output; and
Fig. 6 is a flowchart showing processing procedures performed subsequently to the processing procedures shown in the flowchart of Fig. 5.

### DESCRIPTION OF THE PREFERRED EMBODIMENTS

Embodiments of the present invention will be described with reference to the attached drawings.

### First Embodiment

### (1) Configuration of First Embodiment

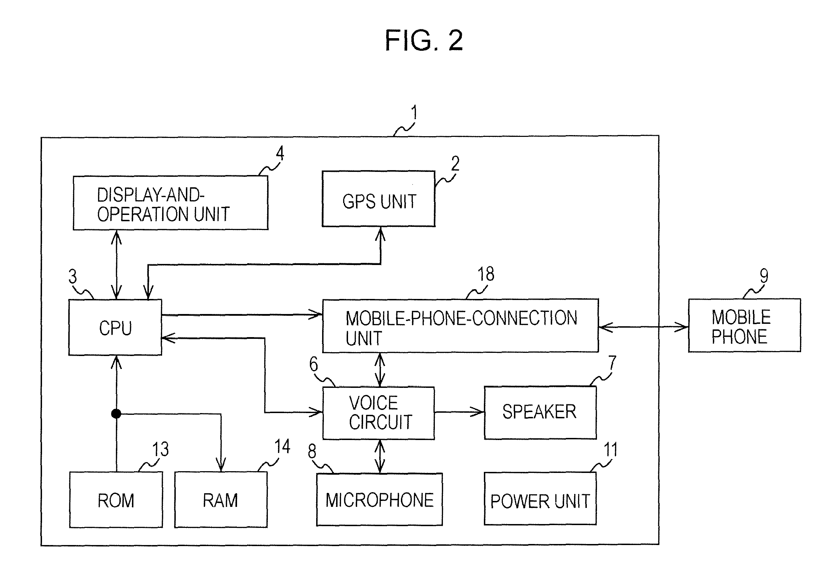

Fig. 2 is a block diagram illustrating a car-navigation device 1 according to a first embodiment of the present invention. The car-navigation device 1 installed in a motor vehicle can receive the input of voice data on a destination or the like and guide a user by using guide voice. That is to say, in the car-navigation device 1, a GPS unit 2 acquires information about the current position of the motor vehicle by using a central-processing unit (CPU) 3 and notifies the CPU 3 of the current-position information.

A display-and-operation unit 4 includes a liquid-crystal-display panel, a touch panel provided on the liquid-crystal-display panel, and at least one operator provided on the operation panel, so as to display an image of a map and various types of graphical-user interfaces. Further, the display-and-operation unit 4 informs the CPU 3 of various operations performed by the user.

A voice circuit 6 switches between operations under control of the CPU 3, drives a speaker 7 by performing digital-to-analog (D/A) conversion for data on a guide voice, the guide-voice data being transmitted from the CPU 3, and outputs the guide voice from the speaker 7. A mobile-phone-connection unit 18 is configured so that a mobile phone 9 can be connected thereto. When the mobile phone 9 is connected to the mobile-phone-connection unit 18, data on the voice of a communication party is subjected to the D/A conversion and the speaker 7 is driven so that the voice of the communication party is output from the speaker 7. Further, a voice signal acquired through a microphone 8 is converted into voice data by performing analog-to-digital (A/D) conversion so that voice data for voice inputting and/or voice data for a conversation is obtained. During the conversation, the voice circuit 6 outputs the above-described voice data to the mobile-phone-connection unit 18. When no conversation is made, the voice circuit 6 outputs the above-described voice data to the CPU 3, as a voice input.

The mobile-phone-connection unit 18 is an interface transmitting and receiving various data between the car-navigation device 1 and the mobile phone 9 by wire or wirelessly. The mobile-phone-connection unit 18 transmits a notification indicating an incoming call or the like to the CPU 3, the notification being obtained by the mobile phone 9. Further, the mobile-phone-connection unit 18 transmits various types of control data output from the CPU 3, where the control data relates to circuit connection or the like. After the circuit connection is done, data on the communication party's voice is output to the voice circuit 6, the voice data being output from the mobile phone 9, and the conversation-voice data output from the voice circuit 6 is output to the mobile phone 9.

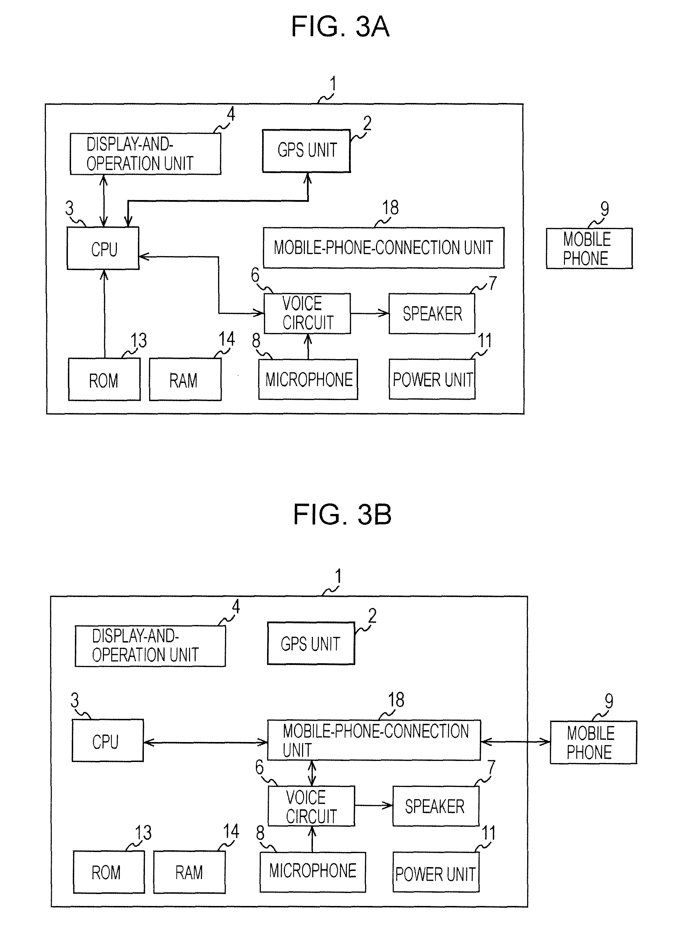

Subsequently, by using the above-described GPS unit 2, voice circuit 6, and so forth, the car-navigation device 1 can display an image of a route to a destination through the display-and-operation unit 4 on the basis of information of the current position of the motor vehicle, the current-position information being obtained by the GPS unit 2, as shown in Fig. 3A. If it is determined that the travel direction should be changed on the basis of current-position information, the guide-voice data provided, so as to instruct the user to turn right and/or left, for example, is output from the CPU 3, and a voice generated on the basis of the guide-voice data is output from the speaker 7. Further, the CPU 3 is informed of an instruction provided, as voices of various users, or data transmitted from the user operating the operators.

On the other hand, when the mobile phone 9 is made to operate, as a handsfree device, the mobile phone 9 is installed in the motor vehicle at a predetermined position, connected to the navigation device 1, and controlled by the CPU 3, as shown in Fig. 3B. Subsequently, even though the driver of the motor vehicle does not hold the mobile phone 9 in his/her hand, that is to say, even though the driver does not use a speaker and/or a microphone of the mobile phone 9, the voice data can be transmitted and/or received between the navigation device 1 and the communication party through the speaker 7 and the microphone 8 that are provided in the navigation device 1.

A power unit 11 transmits power for performing operations to each of the units of the car-navigation device 1. The CPU 3 is provided, as a control unit configured to control operations of the car-navigation device 1. The CPU 3 allocates a work area in a random-access memory (RAM) 14 for executing a program stored in a read-only memory (ROM) 13. The above-described program is installed in the car-navigation device 1 and offered to the user in advance. However, the above-described program may be stored in a recording medium including an optical disk, a magnetic disk, a memory card, and so forth, and distributed to the user of the car-navigation device 1. Further, the above-described program may be downloaded to the user via a network including the Internet, for example.

The CPU 3 executes the above-described program, so as to change from an image displayed on the display unit 4 to a different image showing a map or the like according to an operation performed by the user. Further, the CPU 3 starts route-guide processing according to an instruction transmitted from the user and outputs various types of guide-voice data. Further, the CPU 3 informs the user that an incoming call arrives at the mobile phone 9, and controls the mobile phone 9 so that the mobile phone 9 is connected to the circuit of the car-navigation device 1 according to another instruction transmitted from the user. Further, voice data acquired through the microphone 8 is output to the mobile phone 9 and drives the speaker 7 by using data on the voice of the communication party, the voice data being obtained from the mobile phone 9.

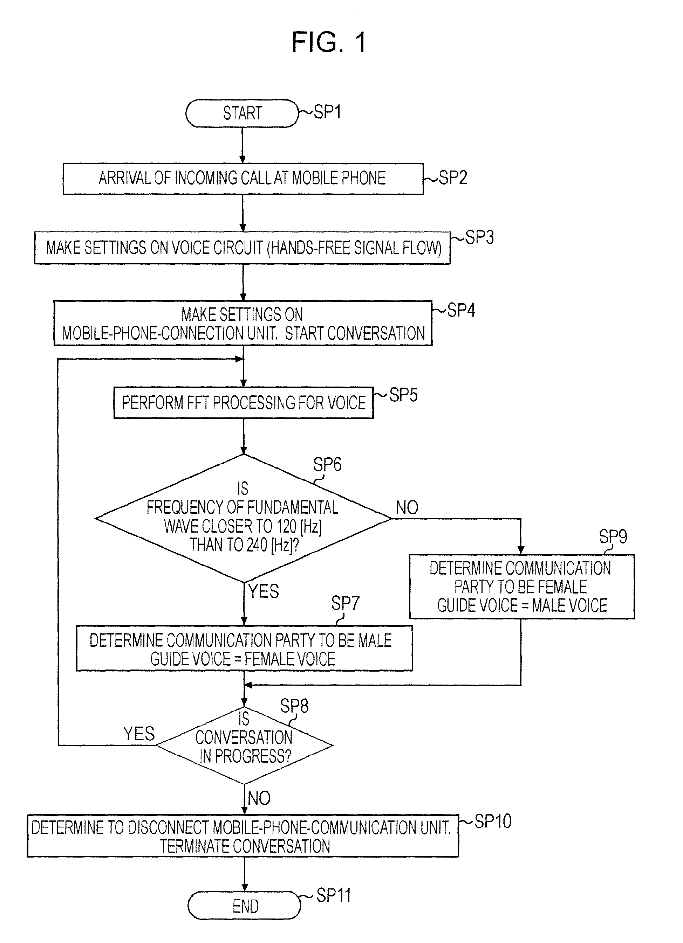

Subsequently, the CPU 3 controls the voice circuit 6 performing operations, so as to transmit the voice of the communication party and the guide voice to the user. When transmitting the communication party's voice and the guide voice to the user at the same time, the CPU 3 makes the pitch of the guide voice variable so that the pitch of the guide voice is significantly different from that of the voice of the communication party. Therefore, the CPU 3 performs incoming-call processing by performing processing procedures shown in Fig. 1, detects the pitch of the voice of the communication party, and determines the pitch of the guide voice.

That is to say, the CPU 3 starts the above-described processing procedures upon being notified of the arrival of the incoming call by the mobile phone 9 and advances from step SP1 to step SP2. At step SP2, the CPU 3 receives the incoming-call-arrival notification transmitted from the mobile phone 9 and notifies the user of the incoming-call arrival. Further, the CPU 3 advances to step SP3 according to an operation performed by the user, so as to start a conversation, and makes settings on operations of the voice circuit 6 so that voice data is transmitted and/or received between the car-navigation device 1 and the mobile phone 9. At step SP4, the CPU 3 instructs the mobile phone 9 to connect to the circuit of the car-navigation device 1 so that a conversation is started.

Then, the CPU 3 advances to step SP5, so as to acquire a predetermined time period's worth of data on the voice of the communication party, analyze the voice data, and detect the frequency of a fundamental wave of the voice data. The above-described analysis on the voice data may be achieved by performing fast Fourier transform (FFT), for example. Next, the CPU 3 advances to step SP6, so as to measure the pitch of the fundamental-wave frequency detected, at step SP5. According to the first embodiment, each of the frequency of 120 [Hz] typifying the frequency of the fundamental wave of a male voice and the frequency of 240 [Hz] typifying the frequency of the fundamental wave of a female voice is determined to be a reference value. Therefore, the pitch of the fundamental-wave frequency is measured by determining which of the frequency of 120 [Hz] and the frequency of 240 [Hz] is closer to the fundamental-wave frequency detected, at step SP5.

If it is determined that the frequency of 120 [Hz] is closer to the fundamental-wave frequency detected, at step SP5, the CPU 3 moves from step SP6 to step SP7 so that the communication party is determined to be a male. After determining to use a female voice for the guide voice, the CPU 3 advances to step SP8. On the other hand, if it is determined that the frequency of 240 [Hz] is closer to the fundamental-wave frequency detected, at step SP5, the CPU 3 moves from step SP6 to step SP9 so that the communication party is determined to be a female. After determining to use a male voice for the guide voice, the CPU 3 advances to step SP8.

At step SP8, the CPU 3 determines whether or not the conversation is finished according to a notification transmitted from the mobile phone 9 and/or an operation performed by the user. If the conversation is in progress, the CPU 3 returns from step SP8 to step SP5. On the contrary, if the conversation is finished, the CPU 3 moves from step SP8 to step SP10, so as to perform a series of conversation-finishing-processing procedures by controlling the mobile phone 9 performing operations. Then, the CPU 3 moves to step SP11 and finishes the above-described processing procedures.

When outputting the guide voice while no conversation is held, the CPU 3 offers the guide voice to the user according to default settings. That is to say, according to the first embodiment, the CPU 3 is set, so as to guide the user by outputting the guide voice when the motor vehicle approaches the destination and/or a point where the travel direction should be changed. The CPU 3 determines the time where the guide voice should be generated on the basis of the current-position information, the travel speed of the motor vehicle, and so forth that are detected from the GPS unit 2.

At the time where the guide voice should be generated, the CPU 3 accesses a memory storing the voice data, obtains the guide-voice data, and outputs the voice data to the voice circuit 6. If no conversation is in progress, the CPU 3 obtains data appropriate for the current situation from an area where female-voice data is stored, and offers the guide voice generated, as a female voice, to the user.

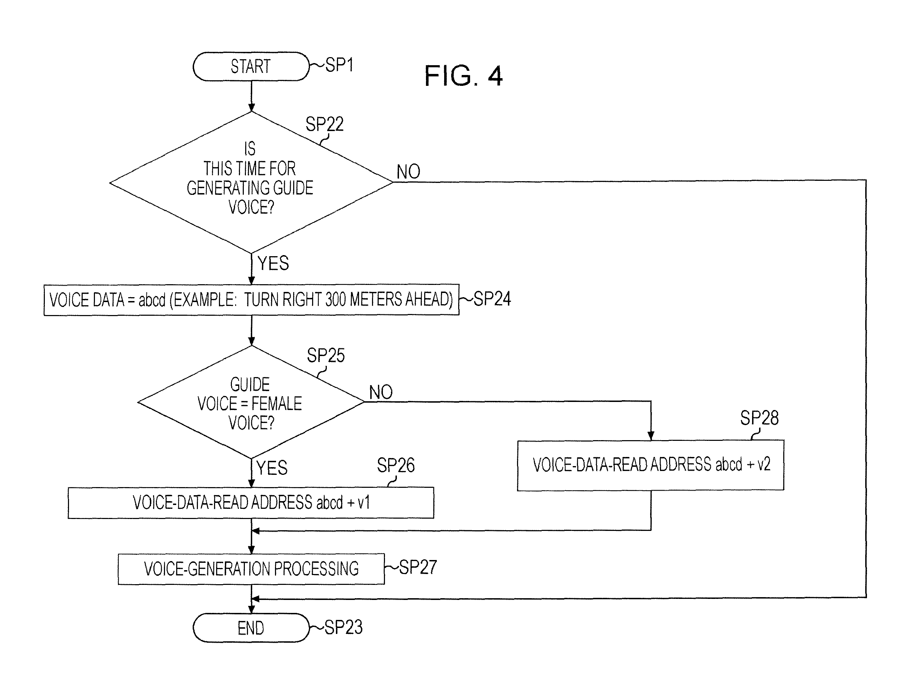

On the other hand, if a conversation is started, the CPU 3 executes processing procedures shown in Fig. 4 at predetermined time intervals, switches back and forth between different voices according to the voice of the communication party, and outputs the guide voice. That is to say, when the CPU 3 starts performing the above-described processing procedures, the CPU 3 advances from step SP21 to the step SP22, so as to determine whether or not it is the time for generating the guide voice.

When the answer is no, at step SP22, the CPU 3 moves from step SP22 to step SP23 so that the above-described processing procedures are finished. On the contrary, when the answer is yes, at step SP22, the CPU 3 moves from step SP22 to step SP24 so that the guide voice that should be offered to the user is determined. The above-described determination will be described in detail, as below. For example, when the user should be notified that the travel direction should be changed at a crossroads, the CPU 3 determines to offer the guide voice saying "Turn right 300 meters ahead" to the user. The CPU 3 makes the guide-voice determination at the address abcd of a predetermined bit on the low-order side of a memory space storing the guide voice offered to the user, for example.

Next, the CPU 3 moves to step SP25, so as to determine whether or not the guide voice set by performing the processing procedures shown in Fig. 1 is generated by using the female voice. If the answer is yes, at step SP25, the processing advances from step SP25 to step SP26 where the CPU 3 adds a predetermined value v1 to the address determined, at step SP24, thereby calculating the address of voice data appropriate for the current situation, the voice data being stored in a memory space where data on a male voice is recorded.

Next, the CPU 3 moves to step SP27, accesses the memory storing the voice data at the above-described calculated address, loads the voice data, and outputs the loaded voice data to the voice circuit 6. Subsequently, the CPU 3 offers the guide voice generated by using the male voice to the user and moves to the step SP23 so that the above-described processing procedures are terminated.

On the other hand, if the answer is no, at step SP25, the CPU 3 moves from step SP25 to step SP28 where the CPU 3 adds a predetermined value v2 to the address determined, at step SP24, thereby calculating the address of voice data appropriate for the current situation, the voice data being stored in a memory space where data on a female voice is recorded.

Next, the CPU 3 moves to step SP27, accesses the memory storing the voice data at the above-described calculated address, loads the voice data, and outputs the loaded voice data to the voice circuit 6. Subsequently, in that case, the CPU 3 offers the guide voice generated by using the female voice to the user and moves to the step SP23 so that the above-described processing procedures are terminated.

When outputting the guide voice while a conversation is held, the CPU 3 determines the pitch of the guide voice so that the pitch of the guide voice is significantly different from that of the voice of the communication party and offers the guide voice to the user by performing the processing procedures shown in Figs. 1 and 4.

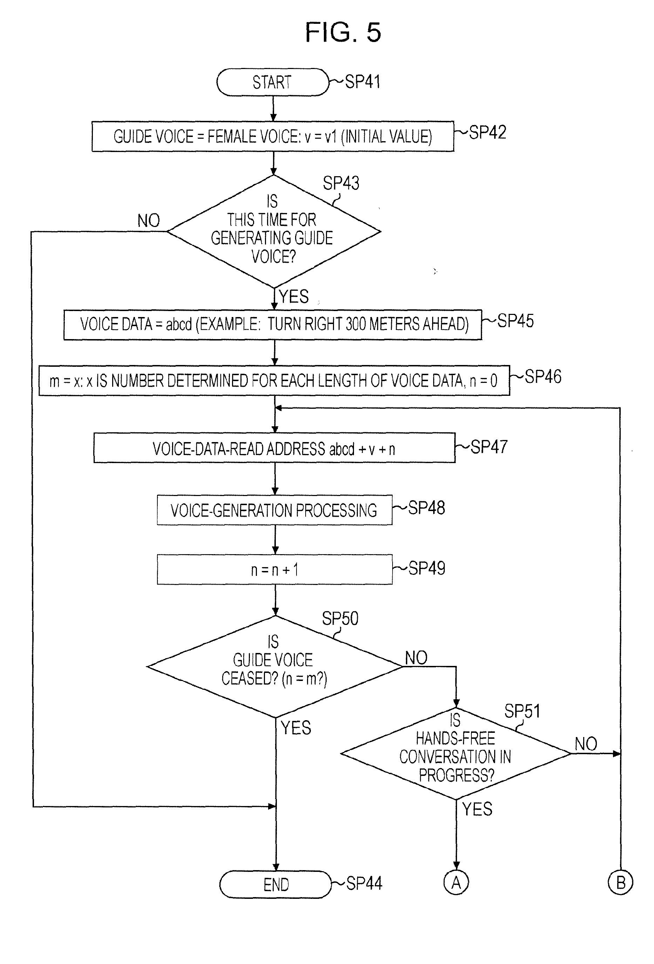

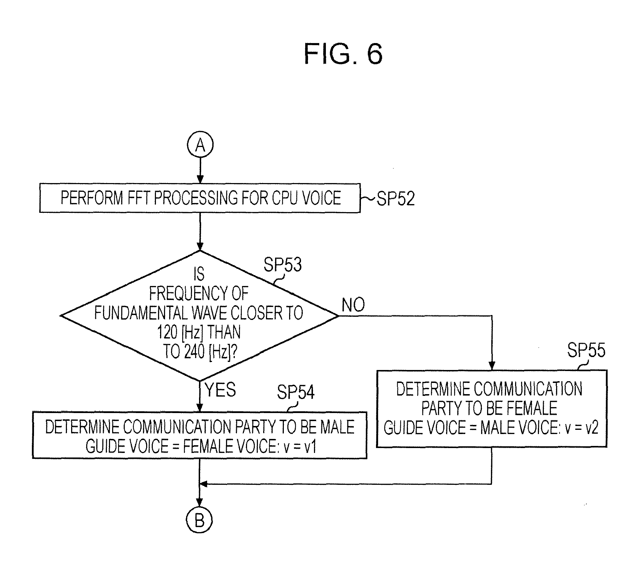

On the contrary, when no conversation is held, the CPU 3 performs processing procedures shown in Figs. 5 and 6 at predetermined intervals, and offers the guide voice to the user according to the default settings. Further, when a conversation is started while the guide voice is offered to the user, the CPU 3 switches to a different voice according to the voice of the communication party and outputs the guide voice during the conversation by performing the processing procedures shown in Fig. 5.

That is to say, after starting the above-described procedures, the CPU 3 moves from step SP41 to step SP42, so as to switch the settings on the guide voice back to the default settings. Then, the CPU 3 moves to step SP43, so as to determine it is the time for generating the guide voice. If the answer is no, at step SP43, the CPU 3 moves from step SP43 to step SP44 so that the above-described processing procedures are terminated.

On the contrary, if the answer is yes, at step SP43, the CPU 3 moves from step SP43 to step SP45 where the CPU 3 determines the guide voice offered to the user, as is the case with step SP24. Further, the length of the guide voice is determined, at subsequent step SP46. At that time, the length of the guide voice is determined so that the user feels normal even though the guide voice is switched from the male voice to the female voice and vice versa while the guide voice is offered to the user. Therefore, the length of the guide voice is determined per a single phrase indicating an instruction for making the user perform a single operation. More specifically, if the guide voice including two phrases "Turn right 300 meters ahead. Please be aware of traffic congestion." is offered to the user, the guide voice corresponding to the former phrase "Turn right 300 meters ahead" is offered to the user at the above-described length.

Next, the CPU 3 moves to step SP47, so as to acquire voice data appropriate for the current situation from a memory space where data on the male voice and/or the female voice is stored by as much as the length determined, at step SP46, according to the next previous voice-data settings. Then, at subsequent step SP48, the CPU 3 outputs the acquired voice data to the voice circuit 6 and offers the guide voice to the user.

Subsequently, the CPU 3 advances to step SP49, so as to step the address where the voice data is read from the memory, and determines the value of the address, at subsequent step SP50 so that it is determined whether or not the guide voice is ceased. If the answer is yes, at step SP50, the CPU 3 moves from step SP50 to step SP44, so as to terminate the above-described processing procedures.

On the other hand, if the answer is no, at step SP50, the CPU 3 moves from step SP50 to step SP51, so as to determine whether or not the conversation is in progress through the mobile phone 9 being used, as the handsfree device. If an incoming call arrives while the processing procedures shown in Fig. 5 are performed, the CPU 3 connects the mobile phone 9 to the circuit of the car-navigation device 1 according to an operation performed by the user, so as to transmit and/or receive voice data between the car-navigation device 1 and the communication party, as is the case with Fig. 1. Thus, if the transmission and/or reception of the voice data is started between the car-navigation device 1 and the communication party by starting the above-described processing procedures, the answer becomes yes, at step SP51. On the contrary, if no conversation is started, or a conversation that had already been started is finished, the answer becomes no, at step SP51.

If the answer is no, at step SP51, the CPU 3 moves from step SP51 to step SP47 and offers the guide voice corresponding to the next phrase to the user.

On the contrary, if the answer is yes, at step SP51, the CPU 3 moves from step SP51 to step SP52, so as to acquire data on the voice of the communication party by as much as a predetermined time period, analyzes the voice data, and detects the frequency of a fundamental wave of the voice data, as is the case with step SP50. Then, at subsequent step SP53, the CPU 3 determines which of the frequency of 120 [Hz] and the frequency of 240 [Hz] is closer to the detected fundamental-wave frequency, thereby measuring the pitch of the fundamental-wave frequency.

If the fundamental-wave frequency is closer to the frequency of 120 [Hz], the CPU 3 moves from step SP53 to step SP54, determines the communication party to be a male, determines to use the female voice for the guide voice, and returns to step SP47. On the contrary, if the detected fundamental-wave frequency is closer to the frequency of 240 [Hz], the CPU 3 moves from step SP53 to step SP55, determines the communication party to be a female, determines to use the male voice for the guide voice, and returns to step SP47.

### (2) Operations of First Embodiment

According to the above-described configurations, if the user determines a destination and instructs the car-navigation device 1 to guide the user to the destination, the car-navigation device 1 searches for a route to the destination. Further, the GPS unit 2 detects information about the current position of the motor vehicle of the user so that the user is guided to the destination on the basis of the current-position information. If the motor vehicle approaches the destination, or a point where the travel direction should be changed, for example, while the user is guided to the destination, the CPU 3 generates the guide-voice data by which the speaker 7 is driven. Subsequently, the user is guided to the destination by voice.

Further, when the mobile phone 9 is connected to the car-navigation device 1, the CPU 3 controls the mobile phone 9 according to an operation performed by the user so that voice data acquired through the microphone 8 functioning, as a unit inputting voice data indicating the destination or the like, is transmitted to the communication party through the mobile phone 9, and data on the voice of the communication party is acquired by the mobile phone 9 and output from the speaker 7 functioning, as a voice-output unit. Thus, in the car-navigation device 1, the voice-input unit and the voice-output unit constitute a handsfree system of the mobile phone 9.

When achieving the above-described handsfree system of the mobile phone 9, so as to guide the user by using the guide voice, the voice of the communication party and the guide voice may be output from the speaker 7 at the same time. In that case, it may be difficult for the user to catch the voice of the communication party, or on the contrary, the guide voice.

Therefore, when the user starts a conversation, the car-navigation device 1 analyzes data on the voice of the communication party at predetermined intervals so that the pitch of the voice of the communication party is measured. Further, the pitch of the guide voice is made variable so that the pitch of the guide voice becomes significantly different from that of the voice of the communication party on the basis of the measurement result when the voice of the communication party and the guide voice are offered to the user at the same time.

Subsequently, the car-navigation device 1 can eliminate the user having to catch the voice of the communication party and the guide voice that are offered to the user at the same time, where the pitch of the communication party's voice is the same as that of the guide voice, so that the user can easily catch the communication party's voice and the guide voice. That is to say, even though the communication party's voice and the guide voice are offered to the user at the same time, the user can clearly catch the above-described two voices due to the difference between the pitches of the above-described two voices.

More specifically, in the car-navigation device 1, the pitch of the communication party's voice is measured in two levels, and the communication party's voice is determined to be either the male voice or the female voice. If the communication party's voice is the male voice, the guide voice is generated by using the female voice and offered to the user. On the other hand, if the communication party's voice is the female voice, the guide voice is generated by using the male voice and offered to the user. Subsequently, it becomes possible to make the pitch of the guide voice variable so that the difference between the pitches of the communication party's voice and the guide voice becomes significant and the user can catch the guide voice naturally.

That is to say, when the user starts a conversation, in the car-navigation device 1, the communication party's voice is analyzed at predetermined intervals and settings are made so that the guide voice is generated by using either the male voice or the female voice on the basis of the analysis result, as shown in Fig. 1. Further, when the guide voice is output during the conversation, the guide voice is output by using either the male voice or the female voice according to the above-described settings made during the conversation, as shown in Fig. 4.

On the contrary, when the guide voice is output while no conversation is held, the guide voice corresponding to each of phrases is offered to the user by using the either the male voice or the female voice according to the default settings. Further, when a conversation is started while the guide voice is offered to the user, the communication party's voice is analyzed at predetermined intervals. Then, the guide voice is generated for each of the phrases by using either the male voice or the female voice on the basis of the analysis result, as shown in Fig. 5.

### (3) Advantages of First Embodiment

Thus, the pitch of the voice generated from the guide-voice data is made variable so that the difference between the pitches of the communication party's voice and the guide voice becomes significant. Subsequently, the user can easily catch the guide voice and the communication party's voice through the navigation device 1 achieving the handsfree system of the mobile phone 9 by using the voice-input unit inputting voice data indicating the destination or the like and the voice-output unit outputting the guide voice.

Further, the pitch of the communication party's voice is measured in two levels so that the communication party's voice is determined to be either the male voice or the female voice. If the communication party's voice is the male voice, the guide voice is generated and offered by using the female voice. On the other hand, if the communication party's voice is the female voice, the guide voice is generated and offered by using the male voice. Subsequently, it becomes possible to make the pitch of the guide voice variable so that the user can catch the guide voice naturally.

### Second Embodiment

According to the first embodiment, the pitch of the guide voice is switched by switching between at least two items of voice data read from the memory. However, according to a second embodiment of the present invention, various configurations can be used, so as to make the voice pitch variable without being limited to the first embodiment. For example, a pitch shifter capable of making the voice pitch variable by performing pitch shifting for the voice data can be used.

However, according to the first embodiment, the pitch of the voice corresponding to the voice data can be varied in two levels. However, according to the second embodiment, the pitch can be varied in three levels, without being limited to the first embodiment.

Further, according to the first embodiment, the guide voice indicating that the travel direction should be changed, for example, is offered to the user. However, according to the second embodiment, the guide voice indicating traffic congestion or the like can be offered to the user, without being limited to the first embodiment.

Still further, according to the first embodiment, the microphone 8 provided, as the voice-input unit, is also used for having a conversation. However, without being limited to the first embodiment, data on the destination or the like may be input by operating the operator and another microphone may be provided only for having the conversation.

Still further, according to the first embodiment, the car-navigation device 1 achieves the handsfree system of the mobile phone 9 separated from the car-navigation device 1. However, without being limited to the first embodiment, the present invention can be used for a car-navigation device including a communication function. Further, the present invention can be used not only for the handsfree system of the mobile phone but also for various types of handsfree systems allowing the user to have a conversation by wire or wirelessly.

Still further, according to the first embodiment, the present invention is used for the car-navigation device. However, without being limited to the first embodiment, the present invention can be used for various types of navigation devices.

It should be understood by those skilled in the art that various modifications, combinations, sub-combinations and alterations may occur depending on design requirements and other factors insofar as they are within the scope of the appended claims or the equivalents thereof.

## Claims

1. A navigation device configured to transmit data on a voice of a user to a communication party, the voice data being acquired by a microphone, receive data on a voice of the communication party, and offer the communication-party-voice data to the user, the navigation device comprising:
voice-data-generation means configured to generate voice data provided, so as to perform guiding;
voice-output means configured to offer a voice generated from the guide-voice data to the user;
voice-data-analysis means configured to measure a pitch of the voice of the communication party by analyzing the communication-party-voice data; and
voice-data-variable means configured to make a pitch of the voice generated from the guide-voice data variable, so as to make a difference between the pitch of the communication party's voice and the pitch of the voice generated from the guide-voice data significant on the basis of the analysis result obtained by the voice-data-analysis means when the voice generated from the communication-party-voice data and the voice generated from the guide-voice data are offered to the user at the same time.

2. The navigation device according to Claim 1, wherein the voice-data-variable means makes the pitch of the voice generated from the guide-voice data variable by switching between a female voice and a male voice, where each of the female voice and the male voice can be used for generating the guide-voice data.

3. The navigation device according to Claim 1, wherein the voice-data-variable means makes the pitch of the voice generated from the guide-voice data variable by switching between at least two items of voice data generated by the voice-data-generation means.

4. The navigation device according to Claim 1, wherein the voice-data-variable means makes the pitch of the voice generated from the guide-voice data variable by performing pitch shifting for the guide-voice data.

5. A navigation device configured to transmit data on a voice of a user to a communication party, the voice data being acquired by a microphone, receive data on a voice of the communication party, and offer the communication-party-voice data to the user, the navigation device comprising:
voice-data-generation means configured to generate guide-voice data;
voice-output means configured to offer a voice generated from the guide-voice data to the user;
voice-data-analysis means configured to determine the communication party's voice to be either a male voice or a female voice on the basis of a pitch of the communication party's voice by analyzing the communication-party-voice data;
voice-data-variable means configured to make the voice generated from the guide-voice data variable so that when the communication party's voice is determined to be one of the male voice and the female voice on the basis of the analysis result obtained by the voice-data-analysis means, the voice generated from the guide-voice data can be changed into the other of the male voice and the female voice when the voice generated from the communication-party-voice data and the voice generated from the guide-voice data are offered to the user at the same time.

6. A method of controlling a navigation device configured to transmit data on a voice of a user to a communication party, the voice data being acquired by a microphone, receive data on a voice of the communication party, and offer the communication-party-voice data to the user, the control method comprising the steps of:
generating voice data provided, so as to perform guiding;
outputting a voice generated from the guide-voice data, so as to offer the generated voice to the user;
analyzing the communication-party-voice data, so as to measure a pitch of the communication party's voice; and
making a pitch of the voice generated from the guide-voice data variable, so as to make a difference between the pitch of the communication party's voice and the pitch of the voice generated from the guide-voice data significant on the basis of the analysis result obtained, at the analysis step, when the voice generated from the communication-party-voice data and the voice generated from the guide-voice data are offered to the user at the same time.

7. A method of controlling a navigation device configured to transmit data on a voice of a user to a communication party, the voice data being acquired by a microphone, receive data on a voice of the communication party, and offer the communication-party-voice data to the user, the control method comprising the steps of:
generating voice data provided, so as to perform guiding;
outputting a voice generated from the guide-voice data, so as to offer the generated voice to the user;
performing a voice-data analysis, so as to determine the communication party's voice to be either a male voice or a female voice on the basis of a pitch of the communication party's voice by analyzing the communication-party-voice data;
making the voice generated from the guide-voice data variable so that when the communication party's voice is determined to be one of the male voice and the female voice on the basis of the analysis result obtained, at the voice-data analysis step, the voice generated from the guide-voice data can be changed into the other of the male voice and the female voice when the voice generated from the communication-party-voice data and the voice generated from the guide-voice data are offered to the user at the same time.

8. A program of a method of controlling a navigation device configured to transmit data on a voice of a user to a communication party, the voice data being acquired by a microphone, receive data on a voice of the communication party, and offer the communication-party-voice data to the user, the program comprising the steps of:
generating voice data provided, so as to perform guiding;
outputting a voice generated from the guide-voice data, so as to offer the generated voice to the user;
analyzing the communication-party-voice data, so as to measure a pitch of the communication party's voice; and
making a pitch of the voice generated from the guide-voice data variable, so as to make a difference between the pitch of the communication party's voice and the pitch of the voice generated from the guide-voice data significant on the basis of the analysis result obtained, at the analysis step, when the voice generated from the communication-party-voice data and the voice generated from the guide-voice data are offered to the user at the same time.

9. A recording medium recording a program of a method of controlling a navigation device configured to transmit data on a voice of a user to a communication party, the voice data being acquired by a microphone, receive data on a voice of the communication party, and offer the communication-party-voice data to the user,
wherein the control method comprises the steps of:
generating voice data provided, so as to perform guiding;
outputting a voice generated from the guide-voice data, so as to offer the generated voice to the user;
analyzing the communication-party-voice data, so as to measure a pitch of the communication party's voice; and
making a pitch of the voice generated from the guide-voice data variable, so as to make a difference between the pitch of the communication party's voice and the pitch of the voice generated from the guide-voice data significant on the basis of the analysis result obtained, at the analysis step, when the voice generated from the communication-party-voice data and the voice generated from the guide-voice data are offered to the user at the same time.
